# EUROPEAN PATENT APPLICATION

(11) **EP 0 708 520 A1**
(43) Date of publication of application: **24.04.1996**
(21) Application number: 94810603.4
(22) Date of filing: 17.10.1994
(51) Int. Cl.: H02K 53/00

(54) **A magnetism driven engine**

(71) Applicant: MEGAPOWER INTERNATIONAL CORPORATION U.S.A., Chamblee, Georgia 30341 (US)
(72) Inventor: Chung, Ching-Kuo, Taipei, Taiwan, R.O.C. (TW)
(74) Representative: Feldmann, Clarence Paul

(57) **Abstract**

This invention is related to a magnetism driven engine and in particular to one including a casing made of non-magnetic material and having two bearings each mounted at an end thereof, an output shaft supported by the two bearings, a plurality of permanent magnets equidistantly mounted on an inner surface of the casing with the same poles thereof directing toward a center line of the casing, a plurality of outer magnetic stators equidistantly mounted on the inner surface of the casing with opposite poles thereof directing toward the center line of the casing, a rotor arranged on the output shaft and made of permanent magnet with its tips carrying the same pole polarity as the poles of the permanent magnets directing toward the center of the casing, a disk generally circular in shape and mounted on an end of the rotor, a plurality of inner magnetic stators equidistantly mounted on the disk and each having an end carrying the same pole polarity as the tips of the rotor, whereby the magnetic energy of the permanent magnets is automatically converted into mechanical motion.

## Description

This invention relates to a magnetism driven engine.

Electric motors converts one form of energy (electricity-the flow of tiny particles called electrons) into another form of energy (mechanical motion). They are one of the most efficient energy-conversion devices. Internal combustion engines and nuclear power plants convert chemical and nuclear energy into other forms, although they waste a considerable amount of energy in the process and create potentially harmful by-products. Electric motors, on the other hand, waste little energy and produce no undesirable by-products. However, much of the coal and oil is burned for the production of electrical power and burning these fuels often produces pollution problems.

Therefore, it is an object of the present invention to provide an engine which converts magnetic energy of permanent magnets into mechanical motion without requiring any other power sources.

This invention relates to a magnetism driven engine.

It is the primary objective of the present invention to provide an engine which is driven by magnetic energy produced by an unique arrangement of permanent magnets, magnetic insulators and magnetic conductors.

It is another objective of the present invention to provide an engine which can automatically convert magnetic energy of permanent magnets into mechanical motion.

It is still another objective of the present invention to provide an engine which can operate almost indefinitely without requiring any other external power source.

It is still another objective of the present invention to provide an engine which will not produce pollution problems at all.

It is a further objective of the present invention to provide an engine which utilizes a simple construction to convert magnetic force of permanent magnets into dynamic force.

Other objects and merits and a fuller understanding of the present invention will be obtained by those having ordinary skill in the art when the following detailed description of the preferred embodiment is read in conjunction with the accompanying drawings wherein like numerals refer to like or similar parts.
FIG. 1 is a cutaway perspective view of a magnetism driven engine according to the present invention;
FIG. 2 is a cross sectional view of the magnetism driven engine;
FIG. 3 is an end elevational view of the triangular rotor;
FIG. 3A is a sectional view of the triangular rotor taken along line 4-4 of FIG. 3;
FIG. 4 is a side view of the output axle engaged with the spline;
FIG. 4A is a sectional view taken along line 4-4 of FIG. 4; and
FIG. 5 illustrates the starting position of the present invention.

For the purpose to promoting an understanding of the principles of the invention, reference will now be made to the embodiment illustrated in the drawings. Specific language will be used to describe same. It will, nevertheless, be understood that no limitation of the scope of the invention is thereby intended, such alternations and further modifications in the illustrated device, and such further applications of the principles of the invention as illustrated herein being contemplated as would normally occur to one skilled in the art to which the invention relates.

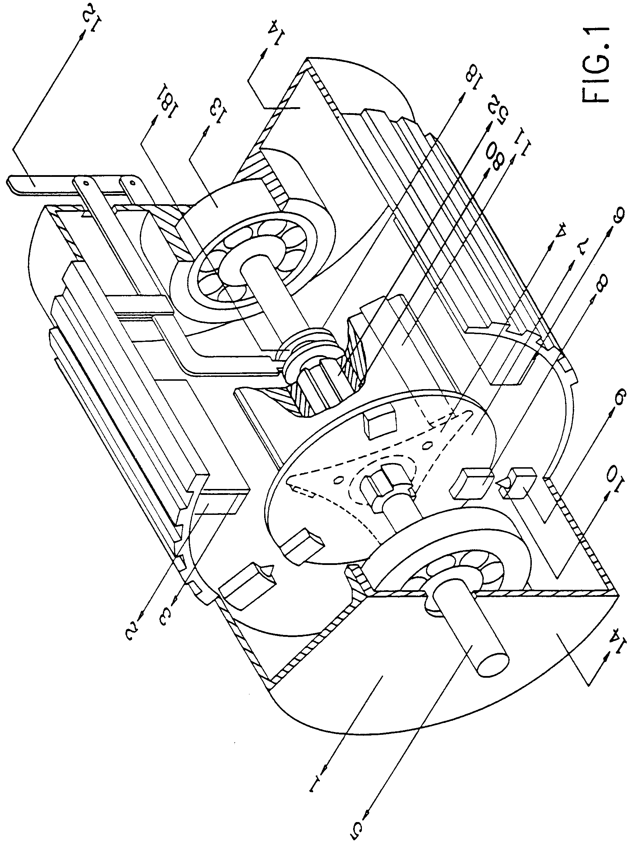

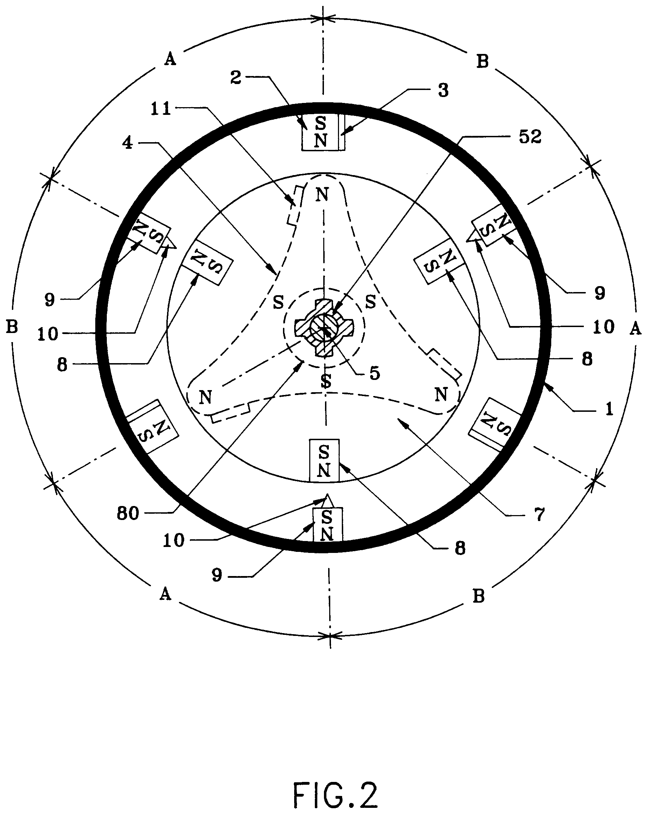

With reference to the drawings and in particular to FIGS. 1, 2 and 3 thereof, the magnetism driven engine according to the present invention mainly comprises a casing 1, three permanent magnets 2, a triangular rotor 4, an output shaft 5, a disk 7, three inner magnetic stators 8, three outer magnetic stators 9, and a control bar 12.

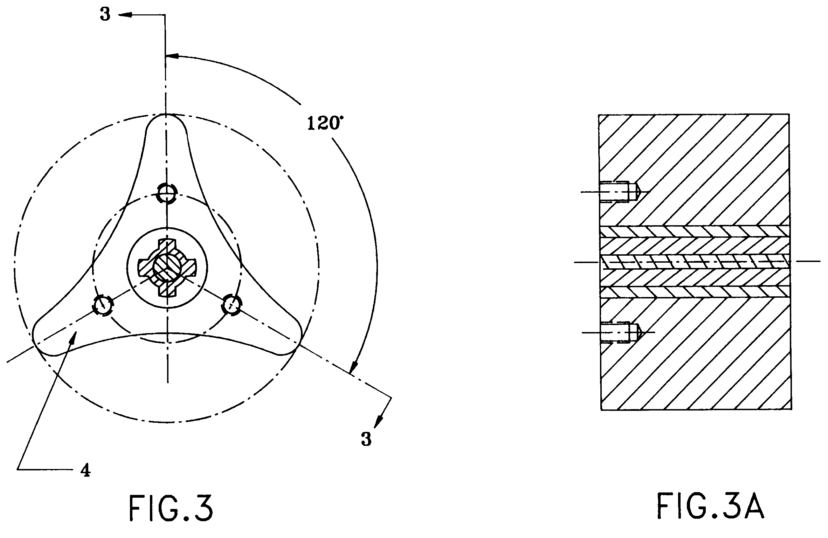

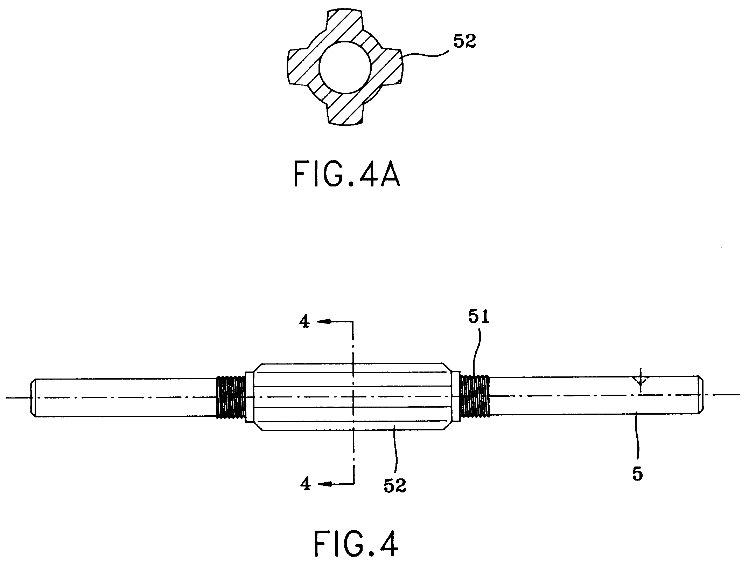

The casing 1 is made of non-magnetic material such as aluminum alloy or the like. The three permanent magnets 2 are equidistantly mounted on the inner surface of the casing 1, with their north poles directing toward the center line of the casing 1. Each of the three permanent magnets 2 is provided with a magnetic insulator 3 at the same lateral side. Between every two of the three permanent magnets 2 there is an outer magnetic stator 9 mounted on the inner surface of the casing 1 and carrying its south pole directing toward the center line of the casing. Each outer magnetic stator 9 is distant from an adjacent permanent magnet 2 in clockwise direction by an angle A, while each outer magnetic stator 9 is distant from an adjacent permanent magnet 2 in counterclockwise direction by an angle B. The angle A is slightly larger than the angle B, but the angle A plus the angle B is equal to 120 degrees. That is to say, the angle A is larger than 60 degrees, whereas the angle B is less than 60 degrees. A conical magnetic conductor 10 is disposed on the south pole of each of the outer magnetic stators 9. A bearing 13 is arranged on both ends 14 of the casing 1, with its center line coincident with the center line of the casing 1. The output shaft 5 is supported by the two bearing 13 and formed with external screw threads 51 at the intermediate portion. A spline 52 having internal screw threads (not shown) is engaged with the external threads 51 of the output shaft 5 so that when the spline 52 is pushed, the spline 52 will be slightly rotated with respect to the output shaft 5 (see FIGS. 3, 3A, 4 and 4A). The spline 52 is engaged with a tubular member 80 which is made of magnetic conducting material and is fixedly fitted in the triangular rotor 4. Hence, the triangular rotor 4 will move in unison with the spline 52. Further, the triangular rotor 4 is made of permanent magnet and arranged on the output shaft 5 and has three north poles each at one of its equidistant tips. A tubular member 80 made of magnetic conducting material is coaxially inserted into the triangular rotor 4. On the same side of each tip of the triangular rotor 4 is mounted an elongated magnetic insulator 11. One end of the triangular rotor 4 is fixedly connected with the disk 7 on which there are three equidistant inner magnetic stators 8 with their north poles directing toward corresponding magnetic conductors 10. Each of the inner magnetic stators 8 is located exactly between two adjacent tips of the triangular rotor 4. The disk 7 is made of non-magnetic material. A collar 18 made of magnetic conducting material is fixedly mounted on an end of the triangular rotor 4 and has a groove 181 around its circumference. The control bar 12 is provided with a ring (not shown) which is loosely sleeved on the groove 181 of the collar 18 and so when the control bar 12 is moved, the collar 18 will push the triangular rotor 4 to move.

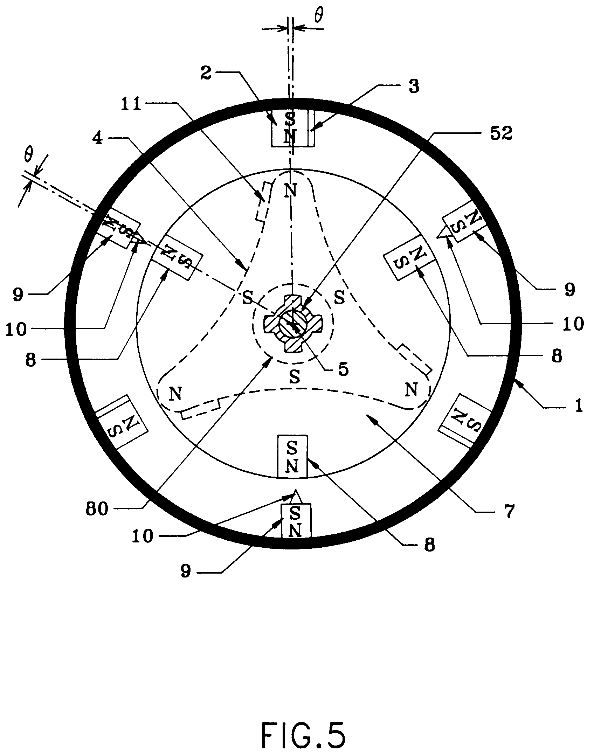

When not in use, the triangular rotor 4 is located at a rear position and is not influenced by the repelling force of the permanent magnets 2 thus keeping the triangular rotor 4 at a fixed position. When desired to turn on the engine, it is only necessary to move the control bar 12 to push triangular rotor 4 together with the spline 52. As the spline 52 is threadedly engaged with the output shaft 5, the spline 52 will be slightly rotated to a preset position with respect to the output shaft 5 when pushed forward. Hence, the triangular rotor 4 will be also slightly rotated with the spline 52 through angle θ to a preset position (see FIG. 5). In the meantime, the north pole at the tip of the triangular rotor 4 is slightly moved away from the corresponding permanent magnet 2 in counterclockwise direction thereby producing repulsion between the tips of the triangular rotor 4 and the permanent magnets 2, while the conical magnetic conductor 10 attracts the corresponding inner magnetic stator 8 on the disk 7, consequently losing the equilibrium between the magnetic forces and therefore making the triangular rotor 4 rotate in one direction. When desired to stop the triangular rotor 4, simply pull the control bar 12 to move the triangular rotor 4 back to its original position where it will not be influenced by the repelling force of the permanent magnet 2.

It should be noted, however, that the triangular rotor 4 may be replaced with a polygonal rotor, and the number of the permanent magnets 2, the outer magnetic stators 9 and the inner magnetic stators 8 may be changed as required.

The invention is naturally not limited in any sense to the particular features specified in the forgoing or to the details of the particular embodiment which has been chosen in order to illustrate the invention.
Consideration can be given to all kinds of variants of the particular embodiment which has been described by way of example and of its constituent elements without thereby departing from the scope of the invention. This invention accordingly includes all the means constituting technical equivalents of the means described as well as their combinations.

## Claims

1. A magnetism driven engine comprising:
a casing made of magnetic insulating material and having two bearings each mounted at an end thereof;
an output shaft supported by said two bearings;
a plurality of permanent magnets equidistantly mounted on an inner surface of said casing with the same poles thereof directing toward a center line of said casing;
a plurality of outer magnetic stators equidistantly mounted on the inner surface of said casing with opposite poles thereof directing toward the center line of said casing, each of said outer magnetic stators being distant in one direction from an adjacent one of said permanent magnets by an angle which is slightly larger than an angle distant in an opposite direction from an adjacent one of said permanent magnets;
a rotor made of permanent magnet, arranged on said output shaft and having tips carrying the same pole polarity as the poles of said permanent magnets directing toward the center of said casing;
a disk generally circular in shape, mounted on an end of said rotor; and
a plurality of inner magnetic stators equidistantly mounted on said disk and each having an outer end carrying the same pole polarity as the tips of said rotor, each of said inner magnetic stators being located exactly between two adjacent tips of said triangular rotor.

2. The magnetism driven engine as claimed in Claim 1, wherein said rotor is triangular in shape.

3. The magnetism driven engine as claimed in Claim 1, wherein said rotor is polygonal in shape.

4. The magnetism driven engine as claimed in Claim 1, wherein each of said permanent magnets is provided with a magnetic insulator at the same lateral side.

5. The magnetism driven engine as claimed in Claim 1, wherein said output shaft supported by said two bearings and having external screw threads is engaged with internal threads of a spline.

6. The magnetism driven engine as claimed in Claim 1, wherein each of the tips of said triangular rotor is provided with a magnetic insulator.

7. The magnetism driven engine as claimed in Claim 1, further comprising a tubular member made of magnetic conducting material which is inserted into said triangular rotor.

8. The magnetism driven engine as claimed in Claim 1, wherein said outer magnetic stator is provided with a conical magnetic conductor thereon.

9. The magnetism driven engine as claimed in Claim 1, further comprising a collar made of magnetic conducting material, loosely fitted on said output shaft, and connected with a control bar.
